# EUROPEAN PATENT SPECIFICATION

(11) **EP 2 179 170 B1**
(45) Date of publication and mention of the grant of the patent: **10.08.2011**
(21) Application number: 08788283.3
(22) Date of filing: 11.08.2008
(51) Int. Cl.: F03B 13/04

(54) **WAVE POWER CONVERSION**
WELLENENERGIEUMWANDLUNG
CONVERSION D'ÉNERGIE DES VAGUES

(30) Priority: 09.08.2007 GB 0715569
(43) Date of publication of application: 28.04.2010
(73) Proprietor: Newman-Lowe, Nicola, Hampshire GU46 6QG (GB); Turner, Gordon Henry, Yateley, Hampshire GU46 6NR (GB)
(72) Inventor: TURNER, Gordon, Henry, Yateley Hampshire GU46 6NR (GB)
(74) Representative: Wray, Antony John
(86) International application number: PCT/GB2008/002714
(87) International publication number: WO 2009/019490

(56) References cited:
- WO-A-90/04718
- US-A- 960 478
- US-A- 1 791 239
- US-A- 3 685 291

## Description

My published application WO 90/04718, the contents of which are incorporated herein by reference, describes a mechanism for using wave power to drive a turbine to generate electricity or even to directly drive a floating vessel. Floats are mounted between two hulls of the floating vessel and are guided to move vertically as waves run past the hulls. The floats are coupled directly to pistons which reciprocate in cylinders to compress air. The compressed air is then fed to an air turbine to rotate the turbine and generate electricity or drive the vessel.

I have successfully modelled my earlier wave power conversion mechanism. In my earlier application I noted that under heavy sea conditions it may be necessary to block out some of the waves or limit the float movement. I have realised that a particular problem is the vertical speed with which the floats and the associated pistons must move if the floats are to track the water surface when a fast moving or high wave passes the vessel.

I provide a wave power generator device in which a lower end of a tube extends through the surface of a passing wave. The tube lower end is open and, as the wave passes the tube, upward movement of the water surface in the tube will push the air above the water surface through an outlet at an upper end of the tube and this movement of air can be used to generate power.

Thus, it is possible to eliminate the use of floats and pistons and so provide a system with the minimum of moving parts.

There have been many proposals for devices which use the movement of the wave surface in a tube to generate air pressure to drive a turbine or the like. Examples include W02007/057013; GB-A-2429243; GB-A-2325964; GB-A-2161544; GB-A-2-8-437; GB-A-1492427; GB-A-385909; US-A-4441316; US-A-4466244; US-A-5027710; US-A-5074710; US-A-5191225; US-5191225 and DE-A-2512946. However, in all these devices the lower end of the tube remains immersed in the water throughout the passage of the wave. Some devices make use of this to operate a closed system, the rising wave surface creating air pressure in one direction to drive a turbine, the falling wave surface creating air pressure on the opposite direction (in effect a negative pressure) to drive one turbine or alternate turbines.

US-A-3685291 discloses an electric power station for producing fresh water as a byproduct by a dehumidification process by utilizing the kinetic and potential energy of water wind waves common to large bodies of water. A wave energy converter includes a reception channel and an automatically adjustable standing wave basin, a wave energy extraction system comprising a plurality of vertical chambers having open bottom ends located approximately coincident with the theoretical wave nodal line and having upper ends, check valved to admit ambient air as the water level therein descends, and to allow to be discharged therefrom as the water level therein rises, an intake manifold admitting ambient air to the chambers, an exhaust manifold for collecting exhausted air under pressure, a refrigerant coil system for extracting water from the exhausted air, and a power conversion system for utilizing the exhausted air under pressure as the prime mover to create electrical energy.

US-A-1791239 discloses a power generating mechanism for converting wave energy into electrical power. The mechanism comprises a floating platform having extending downwardly therefrom a plurality of chambers open at the bottom. Each chamber has an intake pipe entering the top thereof and provided with a one-way valve which permits air to enter through the intake pipe into the chamber but prevents it from passing out in the opposite direction.

US-A-960478 discloses a device from compressing air by water power to be located on the shore. The device comprises a frame having a plurality of cells arranged in tiers. From the rear of each cell extends a pipe having a reduced diameter, all the pipes communicating with a header. There is an air inlet valve in each pipe. The force of incoming waves traps air in the cells and drives it through the pipes.

To generate a substantial volume of pressurised air it is desirable to use a bank of tubes. I have realised that continual presence of the tube ends below the water surface, i.e. throughout the rise and fall of the surface of the waves, will fragment the waves and so substantially reduce the amount of energy which can be generated from the waves.

Thus, I position the lower end of the tube so that it is above the water surface during part of the wave cycle. The lower end of the tube is positioned above the mean water level. In this way the tubes do not interfere with the wave passage for part of the wave cycle, typically about half of the wave cycle.

The tube outlet may be provided by a bleed aperture or check valve at its upper end so that air is released through the check valve. The air may be fed to a storage or collection chamber from where it can be bled off for further use. By providing a collection chamber, particularly with air fed from several tubes, a more even output of air can be obtained.

The air displaced by the waves may be fed to a power generation device such as an air driven turbine.

In effect, the water surface rises in the tube in the manner of a piston. The air flow generated in the tube will depend on the space in the tube above the water surface and the stroke of the water surface in the tube.

In one form, at the upper end of the tube, I provide a check or non-return outlet valve which will open under the pressure of the displaced air. Preferably the valve is mechanical, such as a ball valve or butterfly or flap valve.

Preferably the outlet valve is provided at the upper end of the tube. The outlet valve may be mounted directly on the tube or in a manifold leading from the tube. Preferably a low resistance path is provided from the tube to the collection chamber or air tank to minimise pressure loss.

As the sea water level in the tube falls, a check or non-return inlet valve at the upper end of the tube opens to allow air to enter the tube above the water level.

In another aspect of my invention, I support an array of tubes between two hulls which float on the water. In this way, the lower ends of the tubes may be kept in a reasonably constant position relative to the mean water line. The tube lower ends are held above the mean water line. Means may be provided for altering the buoyancy of the hulls to adjust the height of the tube lower ends relative to the mean water line.

The hulls may house means for converting the pressurised air, generated by the movement of the waves in the tubes, to another form of energy, such as electricity. An air driven turbine may be used.

Preferably the tubes are suspended between the hulls. The tubes may hang from cables, hawsers or the like which are stretched between the hulls and adjustable to alter the tension in the cables. A superstructure may be supported on the hulls, and extend above the waterline, to provide decks, cabins, control equipment, and the like.

The tubes may be suspended via hooks which are coupled to the tubes and hook over the cables. Preferably the hooks are slidably mounted in the tubes and can be raised within the tube to lift them off the cables to release a tube. Preferably the hooks are operable from the lower end of the tube and the tube can be released downwards to remove it from the array of tubes for inspection or repair.

The system of my invention generates a large volume of air flow in a short period of time, and so considerable energy can be harnessed by utilising this air flow.

The invention will be further described by way of example with reference to the accompanying drawings, in which:
Figure 1 is a vertical cross section through a vessel forming a first embodiment of my invention;
Figure 2 is a horizontal cross section along the line II-II of Figure 1;
Figure 3 shows schematically the use of non-return outlet and inlet valves;
Figures 4a and 4b illustrate a mechanism for removably supporting tubes in the embodiment of Figure 1;
Figure 5 is a schematic plan view illustrating part of the arrangement of Figure 4;
Figure 6 shows a vertical cross section through a vessel forming a second embodiment of my invention;
Figure 7 shows an arrangement of the upper end of a tube of the embodiment of Figure 6;
Figure 8 shows a cross section through the upper end of another embodiment of a tube and the seal with an air chamber for the first or second embodiments, taken along the line VII - VII of Figure 9;
Figure 9 is a plan view of the tube of Figure 8 and
Figure 10 illustrates a device for keeping debris away from the tubes.

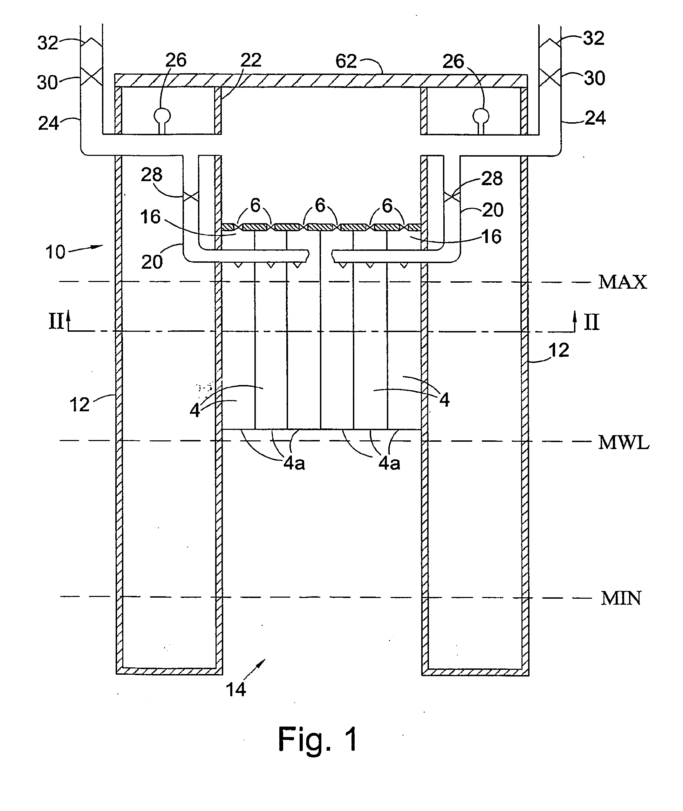

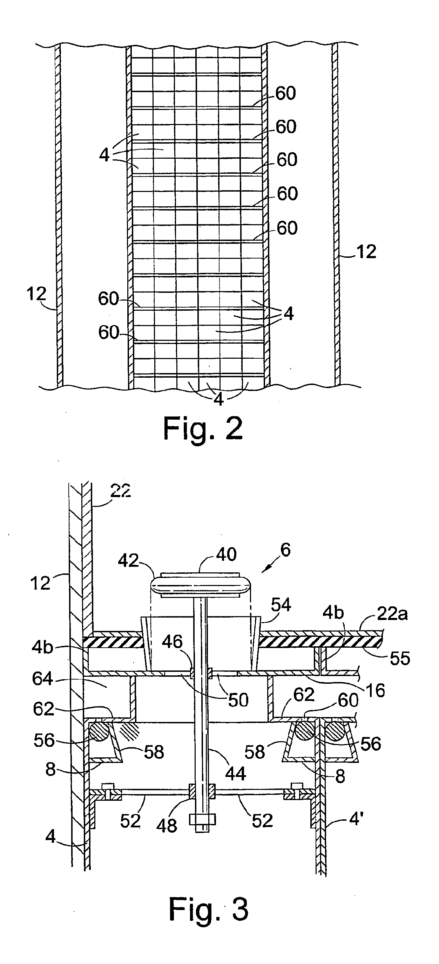

Figure 1 illustrates schematically a vessel 10 embodying my invention. The vessel may be a ship of large size, such as the size of an oil tanker. The vessel has two hulls 12 to provide buoyancy. In this embodiment the hulls 12 are braced together, for example by struts 60 (Figure 2). Figures 1 and 2 are not to scale, in particular the pipes 4 are smaller cross section, relative to the hulls, and so more numerous, as will be appreciated from the following description.

Suitable structures for the vessel are well known in the art and also suggested in my earlier application WO 90/04718.

A space 14 between the hulls 12 houses vertical tubes 4. As shown in Figures 1 and 2, the tubes are of square cross-section and close packed to fill the space 14. Other arrangements of tubes may be used. It may be desirable to provide access between tubes or groups of tubes for repair and replacement. I prefer close packed tubes but it may be found preferable to space tubes apart depending on the vessel size and weight and the normal sea conditions, for example.

The mean water level or datum line is indicated at MWL in figure 1. By way of example, the expected wave height above the mean water line, i.e. the crest of the wave, is indicated by the line MAX. Technically, the actual wave height is the crest to trough height (i.e. MAX to MIN in Figure 1), the wave surface oscillating about the mean water line MWL.

The tubes 4 are arranged so that the lower ends 4a of the tubes 4 will normally be above the mean water level, and hence uncovered in the period of the wave trough. The tubes 4 are preferably sufficiently long so that the upper end 16 of the tubes will normally be above the expected wave crest. In unexpectedly rough seas, water could pass up through the tube outlets, described later, and so drain valves or the like may be provided in the air chamber 22 above the tubes 4.

Means may be provide to adjust the buoyancy of the vessel to adjust the height of the tubes relative to the mean water level MWL, for example by flooding the hulls 12 with water and pumping water from the hulls to lower and raise the hulls in the water relative to the mean water line MWL.

At the upper ends 16 of the tubes 4, non-return outlet valves or check valves 6 connect the tubes 6 with air tank 22 and air outlets 24. The air tank 22 may incorporate an air bag to contain the air fed into the tank 22. Pressure gauges 26 monitor the air pressure in the tank 22 and may also incorporate a safety valve or relief valve to blow off excess air pressure. The tank outlets 24 may incorporate non-return valves 32 to release air to an air driven turbine or the like. It can be seen that the system is largely self regulatory in that air will only be forced into tank 22 when the pressure in the tubes 4 exceeds the tank pressure by a sufficient amount to open the check valve 6 and then from tank 22 through outlets 24 and valves 32.

However, with high running seas, the pressure could be substantial and so some regulation is desirable, preferably by bleeding off excess pressure. Simply holding the valves 6 closed would affect the buoyancy of the vessel.

A mesh filter could be provided below the valves 6 to prevent fouling of the valves by floating debris entering the tubes 4. Some cleaning of the tubes 4 may be achieved in situ using compressed air, for example. This could be fed from the tank 22 via a manifold 20 under the control of open and shut valves 28, 30, i.e. shutting valves 30 and opening valves 28. However, it is also desirable to allow for removal of the tubes 4. One way of providing readily removable tubes will be described hereinafter.

Referring to Figure 3, the upper edge 4b of the pipe 4 mates with the air tank floor 22a via a rubber gasket or seal 55.

Referring still to Figure 3, this shows a pipe outlet check valve 6 suited to robust usage and the passage of a large volume of air. Valve 6 comprises a circular disc 40 carrying a rubber seal 42 at its periphery. Disc 40 is supported on an axle 44 which is guided in bearings 46, 48 mounted on spokes 50, 52 at the upper end of the tube 4. The disc 40 seats in a conical cup 54 when the valve is closed, seal 42 forming a seal with cup 54 to close the check valve 6. As pressure in the upper end of the tube 4 rises and exceeds the weight of the disc 40 and the air pressure above the disc, the disc 40 is lifted to allow air to pass into the air tank 22. As the sea water level starts to fall, the disc 40 will drop back to close the valve 6.

Also shown in Figure 3 are inlet check valves 8 which are located at each corner of the square cross section pipe 4. Valves 8 are in the form of a ball 56 which is housed in a conical web 58 below an inlet aperture 60 formed in a re-entrant wall surface 62. Re-entrant walls 62 define an air passage 64 which is connected with atmosphere. When the pressure in the tube 4 rises, the air flow though the inlet aperture 60 will draw the ball 56 upwards to seal the aperture 60. The ball 56 may be spring loaded towards the aperture 60, as well known with ball check valves.

As shown, the wave surface is on its upward travel and so forces air past outlet valve disc 40 and into the air tank 22. Balls 56 are forced up against the inlet apertures 60, closing the check valves 8. When the wave surface starts to fall, disc 40 drops to close the outlet valve 6, and balls 56 are drawn downwards to open the inlet valves 8 and allow air into the tubes 4 via the channels 64 and inlet apertures 62.

It will be appreciated that a variety of type and number of non-return inlet and outlet valves may be used. The valves chosen will depend in part on the pressure ranges to be dealt with, which in turn will depend on expected sea conditions and the prevailing operating environment. It is desirable to use mechanical valves which will operate automatically and use the minimum of moving parts to reduce maintenance.

The dimensions of the vessel will depend on the prevailing conditions and where the vessel is to be used. The vessel need not travel, it may be anchored. An elongate vessel, similar in shape to a ship such as an oil tanker, is preferred, the hulls 12 extending longitudinally of the vessel. The vessel may be allowed to orient itself with the direction of the wave travel or the wind direction. Preferably a propulsion system is provided for orienting the vessel. It will be appreciated that a fixed installation such as an oil rig could also be used.

The dimension of the tubes will depend on the expected wave size, the wave height and length. A tube width which is smaller that the wave length is needed to ensure the water level in the tube rises as the wave passes. A typical tube dimension may be about 1 ft. to 3 ft. across, preferably about 2 ft. Square cross-section tubes, for example 2 ft. square, are preferred. A tube length of 30 to 50 ft., preferably about 40ft. is preferred. Metal tubes are envisaged, but plastics or composites of suitable strength may also be used. Greater tube lengths, for example 100 ft., could be used to accommodate larger waves.

In a vessel of substantial size, tubes may be arranged over an area of 800 ft. or longer by 100ft or more wide. It can be seen that a single wave travelling the length of the tube array will displace a very large volume of air in a short space of time.

A long and heavy floating vessel is desirable for carrying the pipes to provide stability and reduce pitching and rolling of the vessel- depending of course on how heavy the seas are. The length direction of the vessel itself (bow to stem) will be aligned with the direction of travel of the waves for greater stability.

It is preferable to locate the wave power device over an area of flat sea bed where wave power is primarily expended in the vertical movement of the water.

The compressed or high pressure air generated may be used to drive a vessel and/or to generate electricity for example. The pressurised air my be fed to a turbine, for example. Energy produced may be used locally, as on a vessel such as a ship or an oil rig, or fed to shore. It will be appreciated that for an installation near the coastline, compressed air may be piped or transported ashore, though conversion to electrical energy for transport through cabling may be more effective.

With a large deck surface, wind power generators may be located on the deck surface. The vessel may also provide accommodation for a maintenance crew and the like.

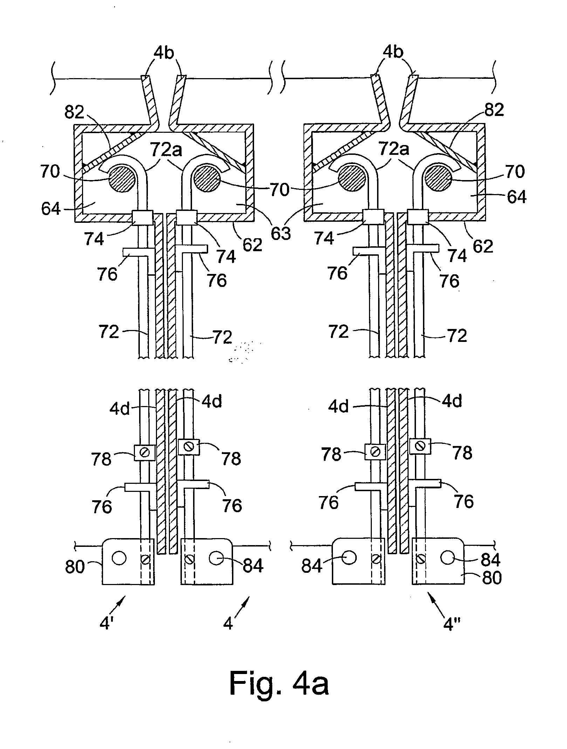

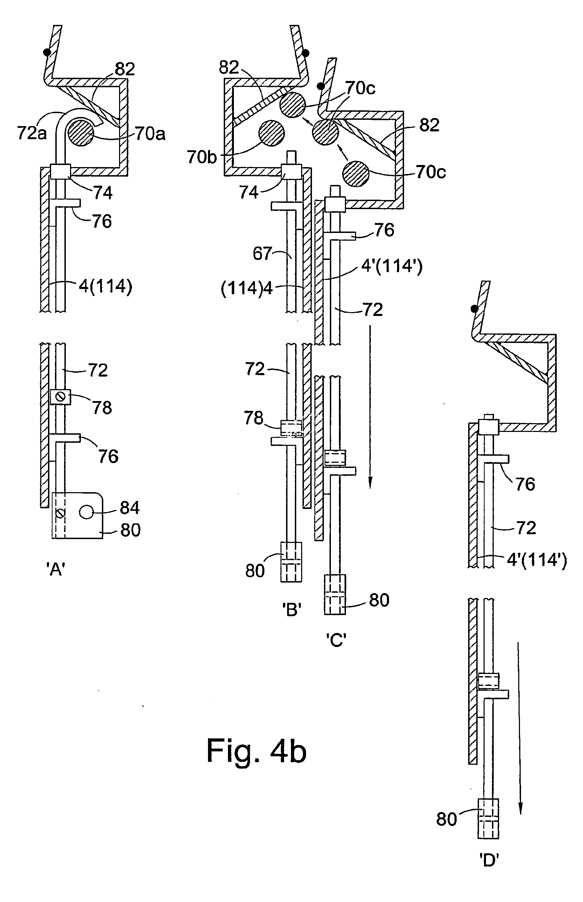

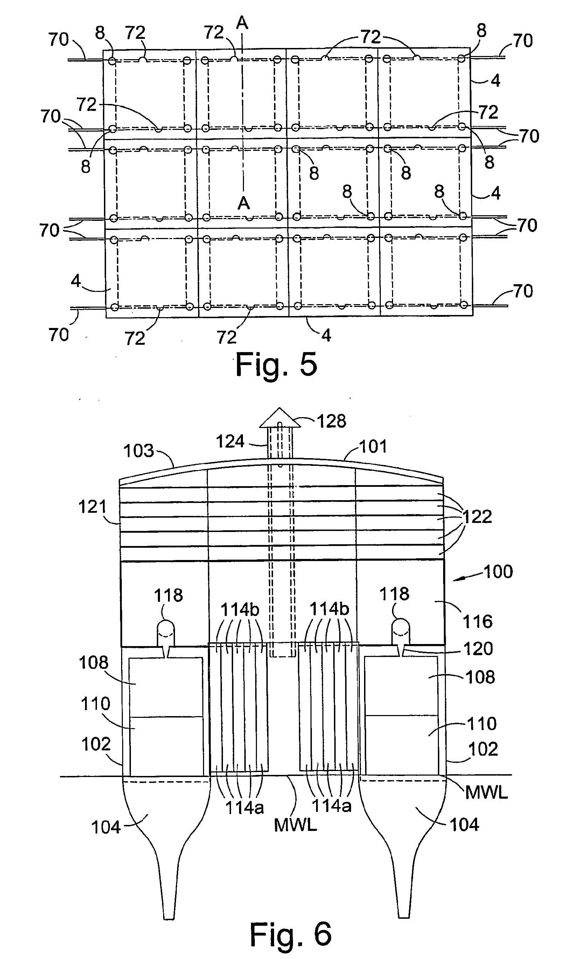

Referring to Figures 4a, 4b and 5, these illustrate a mechanism for removably supporting the pipes 4 below the air tank or collection chamber 22.

Figure 4a shows a vertical cross section through the pipes 4. The inlet and outlet valves 6, 8 have been omitted for clarity. Referring to Figure 5, hawsers or cables 70 are stretched between the hulls 12 across the space 14 which is to be occupied by the tubes 4. A hooked rod 72 extends inside each pipe and through a seal 74 in re-entrant wall portions 62, the hook portion 72a being accommodated in the air passages 64. The rods 72 are guided in brackets 76 attached to the inside of the pipe walls 4d. Adjustable stops 78 are affixed to the rods 72 and abut the lower brackets 76 to limit the downward movement of the rods 72. Handles 80 at the bottom of the rods 72 allow them to be rotated through 90 degrees between a first position to hook the hook portion over a hawser 70 to hold the tube 4 in position, and a second position to unhook them from the hawser to release a pipe 4. Stops may project from the stops 78 to abut the tube wall and limit the degree of rotational freedom of the rods 72. A hole 84 is provided in the handle 80 to facilitate gripping of the handle with a hook or the like when lifting the rod, and the handle may simply be stood on to lower the rod.

In one way of unhooking a tube 4, a diver will swim to the lower end of a pipe 4 and pull or push up on the rod 72 from the bottom and then rotate it 90 degrees to free the hook portion 72a from the cable 70. Once the hook 72a on each side of the tube 4 is released, the tube 4 can be lowered under its own weight.

As seen in Figure 4b, at 'B'. a rod 72 has been unhooked from a hawser 70A. The rod 72 of the adjacent tube has also been unhooked (along with the rod on the other side of the tube (not shown) and the web 82 in the upper corner of the passage 64 serves to guide the hawser 70c out of the passage 64 as the tube 4 is lowered.

The upper end 4b of the pipes 4 is sloped inwards to facilitate sliding a removed pipe back into position between surrounding pipes 4', 4" and the respective hawsers.

Also, the tubes 4 may be arranged with a small spacing between them to accommodate thermal expansion.

Referring to Figure 5, this shows a plan view of a small group of pipes 4 with the location of the hooks 72, which are arranged off-centre along opposite sides of the pipes 4, i.e. on opposite sides of a centre line A-A. Also shown are the inlet valves 8

Referring to Figure 6, this illustrates a modifications of the first embodiment of the invention. A vessel 100 has two hulls 102, each with a lower ballast compartment 104 for receiving ballast, such as water, to adjust the height of the hulls 102 in the water, relative to the mean water line MWL. An upper compartment 106 in each hull houses an air turbine and electricity generator 108, 110. A close packed array of vertical tubes 114, each of generally square cross section, is suspended between the hulls 102. The tubes may be the same as tubes 4 of the first embodiment and are open at their bottom ends 114a which are held just above the mean water line MWL, as for the embodiment of Figures 1 to 5.

The upper ends 114b of tubes 114 connect with an air chamber 116 which stretches between the hulls 102. The floor of the chamber between the hulls 102 is formed by the upper ends 114bof the tubes 114. Tubes 114 to feed air into the chamber 116 via non-return valves. Air from the chamber 114 is fed to the turbines 108 via nozzles or jets 120 fed by pipes 118. Non-return valves may be provided on jets 120.

Several arrays of tubes may be provided along the length of the vessel, as many as ten of more arrays, each with its respective air chamber 116 and feed respective turbines 108 and generators 110. This allows repairs to be undertaken on one array while the remaining arrays remain in service and also for a modular construction of the vessel.

Above the air chamber, the vessel superstructure 121 is formed by several decks 122, which, with the air chambers 116, hold the hulls 102 together. Decks 122 may provide for storage, crew quarters and the like.

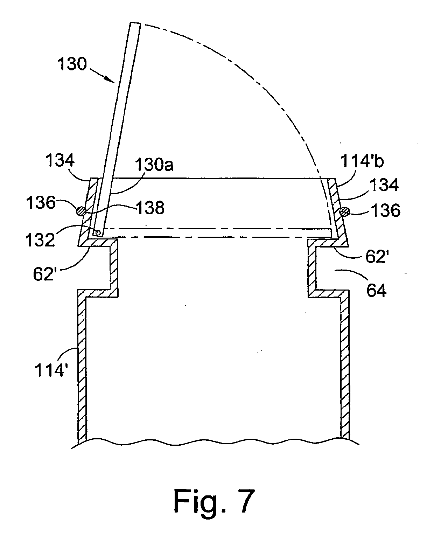

To ensure an adequate flow of air back into the tubes (cf. the non-return valves 8 in tubes 4 of Figure 4), funnels 124 extend down from the top of the vessel to open into a space 126 within the array of tubes 114. A rotating rain hood 128 caps the funnel 124. Figure 7 shows a modification of the upper end 114b of a pipe 114, which may also be used with pipe 4 of the embodiment of Figures 1 to 5. Referring to Figure 7a, pipe 114' has an air channel 64 formed at its upper end 114'b by re-entrant walls as seen also in Figure 4. Non-return valves 8 for inlet of air from the air channels 64 are provided, but are not shown in the drawing. In this modification, the outlet valve 6 is replaced by a flap valve 130. Flap valve 130 is mounted on a pivot 132 at one edge 130a and rests, in the closed position, on the upper wall 62'. The valve may be formed of a relatively light material, such as stiffened rubber.

Also seen in Figure 7, the wall portions 134 forming the square, upper end 114'b of pipe 114' slope inwards to facilitate guiding a pipe between abutting pipes of the array when the pipe is being replaced after servicing. An O-ring 136 in a groove 138 extends around the outer surface of the wall portions 134 to form a seal against O-rings provided on the adjacent pipe ends.

In another modification, the upper end 114'b of the pipe may fit into a collar provided around an aperture in the floor 22a of the air chamber 22 (see Figure 3), the O-ring 136 forming a seal with the collar.

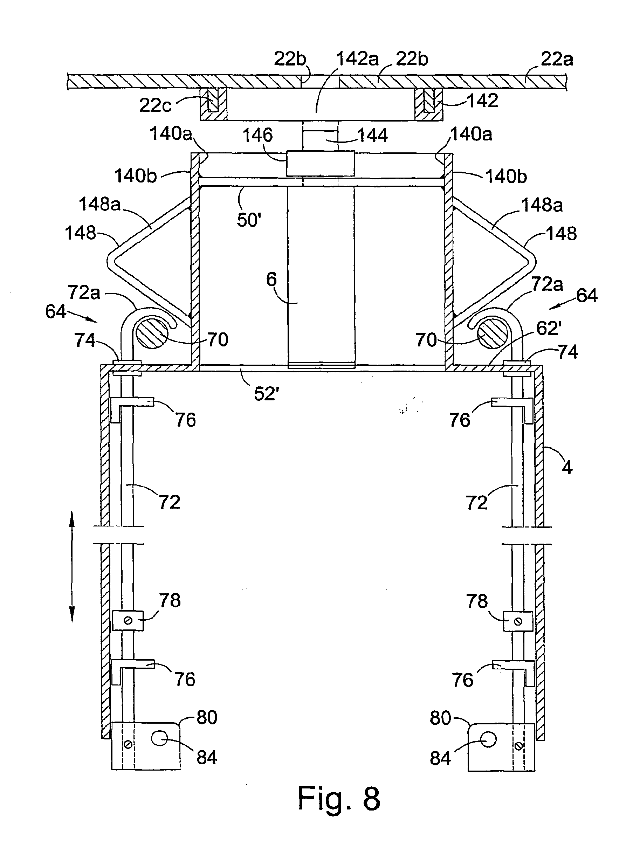

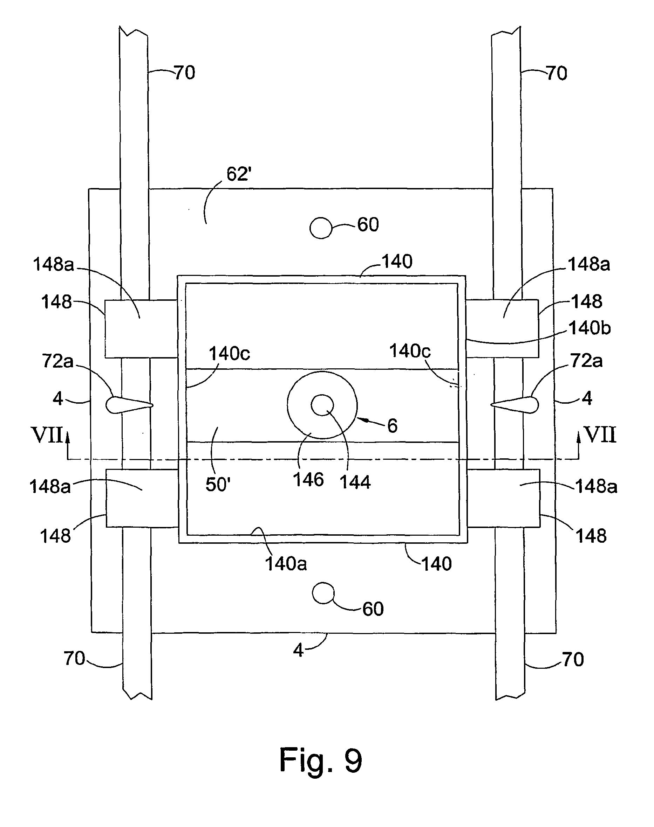

Referring to Figures 8 and 9, these show a further arrangement for the upper end of the tube 4 and for forming a seal with the air chamber 22. In Figures 8 and 9, tube 4 has a an upper wall 62' which carries a collar 140. Webs 50', 52' extend across the inner width to the collar 140 and support a non-return valve 6.

The base 22a of the air chamber 22 has an aperture 22b surrounded by a rim 22c. An elastomeric cap 142 is fitted on the rim 22c and mates with the inner surface 140a of the collar 140 when the tube 4 is pushed up against the underside of the air chamber floor 22a. An upper end 144 of the non-return valve 6 passes through the aperture 22b and air chamber floor 22a seals against an elastomeric washer 146 supported on the web 50'.

Thus air from within tube 4 can pass into chamber 22 via non-return valve 6 only.

In Figure 8, the collar 140 is shown spaced from the rim 142, but in practice will be mated with the rim 142 when the hook ends 72a are hooked on to the hawsers 70, and washer 146 forming a seal around the outlet of the non-return valve 6.

It will be appreciated that the upper end of the collar 140 may be flared outwards, or the rim 22c tapered inwards to assist with location of the collar 140 on the rim 22c.

The upper end of the collar 140 may be sealed, save for the non-return valve 6, and dimensioned to pass inside the aperture 22c to form a seal.

The collar 148 will pass between the hawsers 70 when raising and lowering the tube 4. However, it may be preferred to provide triangular guides 148 welded to the outer surface 140b of the collar side 140c. As shown, the guides 148 are positioned to either side of the hook ends 72a, but could extend along the full length of the collar sides 140c. The upper surfaces 148a of the guides 148 will spread the hawsers 70 apart when the tube 4 is raised into position and the lower surfaces 148c will spread the hawsers apart when the tube 4 is lowered.

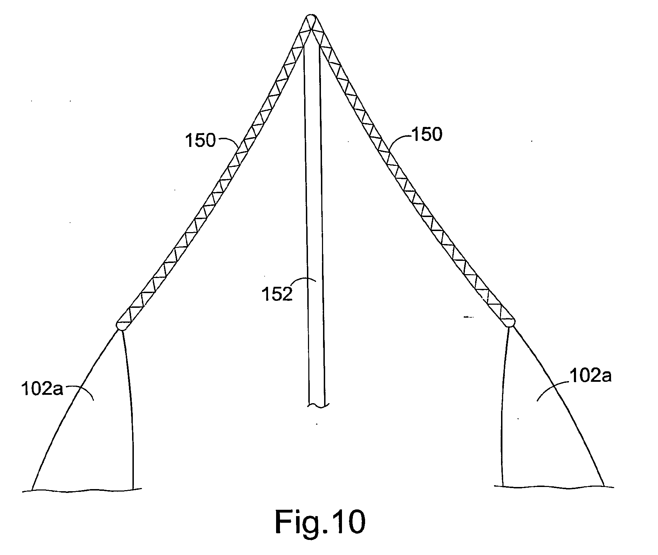

A barrier in the form of a net could be placed at the water surface upstream of the tubes, suspended between the hulls, to reduce the amount of flotsam or the like entering the tubes 4. As illustrated schematically in Figure 10, a net 150 is suspended between the front or bow ends 102a of the hulls 102. A boom 152 may extend out from the superstructure 121 to support the net 150 and provide shape to the net.

Various modifications to the described embodiments will be apparent to those in the art and it is desired to include all such modification as fall within the scope of the accompanying claims.

## Claims

1. A wave power generator device comprising:
(i) a tube (4) mounted on a floating vessel, the tube extending through the surface of a wave and being open below the surface of the wave, to allow water to enter the tube (4); and
(ii) an outlet (6) at an upper end (16) of the tube (4), whereby, as a wave crest passes the tube (4) and increases the water level in the tube (4), air is forced from the tube (4) via the outlet (6);
wherein, in use, the lower end (4a) of the tube (4) is:
(iii) above the mean water level (MWL); and
(iv) uncovered for part of a wave cycle.

2. A wave power generator device as claimed in claim 1, having a non-return inlet valve (8) to allow air into the tube (4) as the height of water in the tube (4) falls.

3. A wave power generator device as claimed in claim 1 or 2, wherein the air is fed from the tube (4) via a check valve (6).

4. A wave power generator device as claimed in claim 3, wherein a plurality of tubes (4) is provided and air from the tubes (4) is fed to an air chamber (22).

5. A wave power generator device as claimed in claim 4, wherein the tubes (4) are close packed.

6. A wave power generator device as claimed in any one of claims 1 to 5, wherein the air is fed to an electrical power generation device to drive the device.

7. A wave power generator device as claimed in any one of claims 1 to 6, wherein in use the upper end (16) of the tube (4) remains above the water surface during passage of a wave.

8. A wave power generator device as claimed in any one of claims 1 to 7, wherein the height of the lower end (4a) of the tube (4) relative to the mean water level (MWL) is adjustable.

9. A wave power generator device as claimed in any one of claims 1 to 8, comprising an array of tubes (4) supported between two hulls (12) which, in use, float on the water, a lower end (4a) of the tubes (4) being above the mean water level (MWL) and uncovered for part of a wave cycle, the surface of a wave moving up and down the tubes (4) to displace air in the tubes (4).

10. A wave power generator device as claimed in claim 9, wherein means is provided for altering the buoyancy of the hulls (12) to adjust the height of the tube lower ends (4a) relative to the mean water level (MWL).

11. A wave power generator device as claimed in claim 9 or 10, wherein the tubes (4) are suspended from cables (70), hawsers or the like which extend between the hulls (12).

12. A wave power generator device as claimed in claim 11, wherein the tubes (4) are suspended by means of hooks (72a) which are attached to the tubes (4) and hook over the cables (70).

13. A wave power generator device as claimed in claim 12, wherein the hooks (72a) are slidable axially of the tubes (4) and rotatable to disconnect them from the respective cable (70).

14. A wave power generator device as claimed in any of the previous claims whereby the floating vessel comprises wind power generators.

## Patentansprüche

1. Wellenkraft-Generatorvorrichtung, umfassend:
(i) ein auf einem schwimmenden Seefahrzeug montiertes Rohr (4), wobei sich das Rohr durch die Oberfläche einer Welle erstreckt und unterhalb der Oberfläche der Welle offen ist, um es Wasser zu ermöglichen, in das Rohr (4) einzudringen, und
(ii) einen Auslaß (6) an einem oberen Ende (16) des Rohrs (4), wobei, wenn ein Wellenberg das Rohr (4) passiert und den Wasserspiegel in dem Rohr (4) erhöht, Luft aus dem Rohr (4) über den Auslaß (6) verdrängt wird,
wobei im Betrieb das untere Ende (4a) des Rohrs (4)
(iii) über dem mittleren Wasserstand (MWL) liegt und
(iv) während eines Teils eines Wellenzyklus unbedeckt ist.

2. Wellenkraft-Generatorvorrichtung nach Anspruch 1, mit einem Einwege-Einlaßventil (8), um Luft in das Rohr (4) zu lassen, wenn der Wasserstand in dem Rohr (4) sinkt.

3. Wellenkraft-Generatorvorrichtung nach Anspruch 1 oder 2, wobei die Luft aus dem Rohr (4) über ein Rückschlagventil (6) geleitet wird.

4. Wellenkraft-Generatorvorrichtung nach Anspruch 3, wobei eine Mehrzahl von Rohren (4) vorgesehen ist und Luft aus den Rohren (4) in eine Luftkammer (22) geleitet wird.

5. Wellenkraft-Generatorvorrichtung nach Anspruch 4, wobei die Rohre (4) dicht gepackt sind.

6. Wellenkraft-Generatorvorrichtung nach einem der Ansprüche 1 bis 5, wobei die Luft zu einer Stromerzeugungsvorrichtung geleitet wird, um die Vorrichtung anzutreiben.

7. Wellenkraft-Generatorvorrichtung nach einem der Ansprüche 1 bis 6, wobei im Betrieb das obere Ende (16) des Rohrs (4) beim Passieren einer Welle über der Wasseroberfläche bleibt.

8. Wellenkraft-Generatorvorrichtung nach einem der Ansprüche 1 bis 7, wobei die Höhe des unteren Ende (4a) des Rohrs (4) relativ zum mittleren Wasserstand (MWL) einstellbar ist.

9. Wellenkraft-Generatorvorrichtung nach einem der Ansprüche 1 bis 8, umfassend eine Reihe von Rohren (4), die zwischen zwei Rümpfen (12) getragen werden, die im Betrieb auf dem Wasser schwimmen, wobei ein unteres Ende (4a) der Rohre (4) oberhalb des mittleren Wassersstands (MWL) liegt und während eines Teils eines Wellenzyklus unbedeckt ist und wobei die Oberfläche einer Welle in den Rohren (4) aufsteigt und absinkt, um Luft in den Rohren (4) zu bewegen.

10. Wellenkraft-Generatorvorrichtung nach Anspruch 9, wobei Mittel vorgesehen sind, um den Auftrieb der Rümpfe (12) zu ändern, um die Höhe der unteren Enden (4a) der Rohre relativ zum mittleren Wassersstand (MWL) einzustellen.

11. Wellenkraft-Generatorvorrichtung nach Anspruch 9 oder 10, wobei die Rohre (4) an Kabeln (70), Kabeltrossen und dergleichen aufgehängt sind, die sich zwischen den Rümpfen (12) erstrecken.

12. Wellenkraft-Generatorvorrichtung nach Anspruch 11, wobei die Rohre (4) mittels Haken (72a) aufgehängt sind, die an den Rohren (4) befestigt und an den Kabeln eingehakt sind.

13. Wellenkraft-Generatorvorrichtung nach Anspruch 12, wobei die Haken (72a) auf den Rohren (4) axial verschiebbar und drehbar gelagert sind, um diese von dem jeweiligen Kabel (70) zu lösen.

14. Wellenkraft-Generatorvorrichtung nach einem der vorhergehenden Ansprüche, wobei das schwimmende Seefahrzeug Windkraftgeneratoren aufweist.

## Revendications

1. Dispositif de générateur houlomoteur comprenant :
(i) un tube (4) monté sur un bâtiment flottant, le tube s'étendant à travers la surface d'une vague et étant ouvert au-dessous de la surface de la vague, pour permettre à l'eau de pénétrer dans le tube (4) ; et
(ii) une sortie (6) au niveau d'une extrémité supérieure (16) du tube (4), moyennant quoi, lorsqu'une crête de vague passe par le tube (4) et augmente le niveau d'eau dans le tube (4), l'air est obligé de sortir du tube (4) via la sortie (6) ;
dans lequel, à l'usage, l'extrémité inférieure (4a) du tube (4) est :
(iii) au niveau du niveau moyen de l'eau (MWL) ; et
(iv) découvert pendant une certaine partie d'un cycle de vague.

2. Dispositif de générateur houlomoteur selon la revendication 1, ayant une soupape d'entrée de non-retour (8) pour permettre à l'air d'entrer dans le tube (4) au fur et à mesure que la hauteur de l'eau dans le tube (4) baisse.

3. Dispositif de générateur houlomoteur selon la revendication 1 ou 2, dans lequel l'air est alimenté à partir du tube (4) via une soupape anti-retour (6).

4. Dispositif de générateur houlomoteur selon la revendication 3, dans lequel on prévoit une pluralité de tubes (4) et l'air provenant des tubes (4) est alimenté à une chambre d'air (22).

5. Dispositif de générateur houlomoteur selon la revendication 4, dans lequel les tubes (4) sont compacts.

6. Dispositif de générateur houlomoteur selon l'une quelconque des revendications 1 à 5, dans lequel l'air est alimenté à un dispositif de génération de puissance électrique pour entraîner le dispositif.

7. Dispositif de générateur houlomoteur selon l'une quelconque des revendications 1 à 6, dans lequel, à l'usage, l'extrémité supérieure (16) du tube (4) reste au-dessus de la surface de l'eau pendant le passage d'une vague.

8. Dispositif de générateur houlomoteur selon l'une quelconque des revendications 1 à 7, dans lequel la hauteur de l'extrémité inférieure (4a) du tube (4) par rapport au niveau moyen de l'eau (MWL) est ajustable.

9. Dispositif de générateur houlomoteur selon l'une quelconque des revendications 1 à 8, comprenant un ensemble de tubes (4) supportés entre deux coques (12) qui, à l'usage, flottent sur l'eau, une extrémité inférieure (4a) des tubes (4) étant au-dessus du niveau moyen de l'eau (MWL) et découverte pendant une certaine partie d'un cycle de vague, la surface d'une vague faisant monter et descendre les tubes (4) pour déplacer l'air dans les tubes (4).

10. Dispositif de générateur houlomoteur selon la revendication 9, dans lequel on prévoit des moyens pour modifier la flottabilité des coques (12) afin d'ajuster la hauteur des extrémités inférieures (4a) de tube par rapport au niveau moyen de l'eau (MWL).

11. Dispositif de générateur houlomoteur selon la revendication 9 ou 10, dans lequel les tubes (4) sont suspendus à des câbles (70), des amarres ou similaires qui s'étendent entre les coques (12).

12. Dispositif de générateur houlomoteur selon la revendication 11, dans lequel les tubes (4) sont suspendus au moyen de crochets (72a) qui sont fixés aux tubes (4) et s'accrochent sur les câbles (70).

13. Dispositif de générateur houlomoteur selon la revendication 12, dans lequel les crochets (72a) peuvent coulisser de manière axiale par rapport aux tubes (4) et tourner pour les déconnecter du câble (70) respectif.

14. Dispositif de générateur houlomoteur selon l'une quelconque des revendications précédentes, dans lequel le bâtiment flottant comprend des éoliennes électriques.
